Europäisches Patentamt

European Patent Office

Office européen des brevets

(19)

(11) EP 0 685 733 B1

(12) **FASCICULE DE BREVET EUROPEEN**

(45) Date de publication et mention
de la délivrance du brevet:
**07.11.2001   Bulletin 2001/45**

(51) Int Cl.⁷: **G01N 21/89**

(21) Numéro de dépôt: **95401171.4**

(22) Date de dépôt: **19.05.1995**

(54) **Procédé de mesure de la qualité optique d'un vitrage**

Verfahren zur Messung der optischen Güte einer Glasscheibe

Method for the measurement of the optical quality of a glass plate

(84) Etats contractants désignés:
**BE DE ES FR GB IT LU PT**

(30) Priorité: **02.06.1994   FR 9406774**

(43) Date de publication de la demande:
**06.12.1995   Bulletin 1995/49**

(73) Titulaire: **SAINT-GOBAIN GLASS FRANCE
92400 Courbevoie (FR)**

(72) Inventeurs:
 • **Guering, Paul-Henri
  F-75013 Paris (FR)**
 • **Gayout, Patrick
  F-93220 Gagny (FR)**

 • **Florentin, Jean-Michel
  F-60200 Compiegne (FR)**
 • **Pichon, Michel
  F-60270 Gouvieux (FR)**

(74) Mandataire: **Muller, René et al
 SAINT-GOBAIN RECHERCHE,
 39, quai Lucien Lefranc-BP 135
 93303 Aubervilliers Cédex (FR)**

(56) Documents cités:
 **EP-A- 0 342 127        EP-A- 0 463 940
 EP-A- 0 559 524        US-A- 4 454 541
 US-A- 4 605 960        US-A- 4 776 692**

# Description

L'invention concerne les techniques de mesure des défauts optiques des vitrages et particulièrement des vitrages automobiles.

D'une manière générale, l'industrie cherche de plus plus à maîtriser la qualité des produits qu'elle fabrique. Cela est vrai en particulier de la qualité optique des vitrages. Pour atteindre ce but, on maintient dans des fourchettes très étroites tous les paramètres de la production. Mais, néanmoins, un incident est toujours possible et, même s'il est détecté, son effet sur la qualité n'est pas toujours connu de telle sorte qu'un contrôle de la qualité sur 100 % de la production reste indispensable dans de nombreux cas. En ce qui concerne les vitrages, on a souvent besoin d'en évaluer la qualité optique en permanence. On peut, en particulier, souhaiter sélectionner le verre plat sortant des lignes de production pour le destiner à un usage particulier comme par exemple, un miroir destiné à des applications scientifiques ou un verre plat mince destiné à être transformé en un pare-brise très incliné. D'une manière générale, d'ailleurs les pare-brise des automobiles modernes sont particulièrement suivis sur le plan de leur qualité optique. Ce critère touche en effet le problème delà sécurité de la conduite des automobiles et, par ailleurs, les formes des pare-brise, leur inclinaison, les matières dont ils sont fabriqués - verres très minces ou même polymères transparents - nécessitent un contrôle très soigné de la qualité optique, contrôle qu'il faut souvent exercer à 100 %.

Les méthodes ombroscopiques d'évaluation de la qualité optique des vitrages sont connues et exploitées depuis longtemps. Elles sont souvent associées à des caméras CCD qui permettent d'obtenir une msure de l'éclairement en chaque point d'un écran éclairé à l'aide d'une source lumineuse localisée dont les rayons traversent le vitrage avant d'atteindre l'écran. L'analyse de l'image se fait avec un ordinateur.

Dans le document EP-B-0 342 127, on mesure des panneaux de verre flotté de grandes dimensions en élcairant en lumière rasante un ruban horizontal qui défile et en observant au travers du verre l'ombre projetée sur un écran proche du verre et parallèle à lui. Une caméra CCD mesure une bande perpendiculaire au sens de défilement et compare l'éclairement en un point à un éclairement de référence. Celui qu'il y aurait au même point si la feuille de verre était plane, à faces parallèles et exemple de défauts. Une variante du procédé prévoit d'utiliser comme éclairement de référence, l'éclairement de l'écran au point de mesure mais où toutes les variations d'éclairement supérieures à une certaine fréquence spatiale ont été éliminées (filtrage passe bas). Cette méthode, outre qu'elle n'effectue la mesure que dans une seule direction pose un problème lorsqu'on s'approche des limites de la plaque car alors, la mesure de référence devient dissymétrique ce qui fausse la mesure.

Dans un autre document, EP-A-0 493 940, on propose une méthode de mesure ombroscopique d'un vitrage tel qu'un vitrage automobile. La présente invention est un perfectionnement de la méthode décrite dans ce document. La méthode consistait à comparer l'éclairement en un point à l'éclairement de référence étant pondéré en fonction des caractéristiques optiques et géométriques du point correspondant sur le vitrage.

La technique du document EP-A-0 493 940 permet une mesure facile et précise. Malheureusement la procédure d'étalonnage, au cours de laquelle, chaque point du vitrage nécessite une mesure précise des caractéristiques optiques et géométriques est longue et délicate.

L'invention se donne pour tâche d'améliorer les deux procédés précédents. Il s'agit d'une part, à la différence du premier procédé, de permettre une mesure des défauts quelle que soit leur orientation et également, d'autoriser une mesure précise jusqu'aux limites de la plaque. Par rapport au procédé de EP-A-0 493 940, il s'agit d'éviter la procédure d'étalonnage et de garantir une mesure précise dans les conditions les plus variées et en particulier quelles que soient l'inclinaison et la transmission lumineuse des vitrages.

L'invention propose un procédé de mesure tel que décrit dans le revendication 1.

Quand la fenêtre de convolution de l'image comporte des domaines où la mesure directe de l'éclairement est impossible ou interdite on substitue aux valeurs mesurées dans ces domaines des valeurs estimées extrapolées à partir de celles mesurées dans les surfaces voisines des domaines exclus de la mesure.

L'estimation des éclairements dans les domaines exclus se fait par les étapes suivantes :

- maillage de la surface de mesure du vitrage,
- identification des mailles limites des domaines exclus,
- calcul de l'éclairement moyen de la partie autorisée de la maille limite et du pourcentage de la surface cette partie de la maille,
- calcul de l'éclairement moyen de la maille limite par extrapolation à partir des mailles voisines et de la partie autorisée de ladite maille limite, chacune pondérée en fonction de sa surface non exclue de la mesure.

Après avoir estimé les éclairements dans les domaines exclus, on reconstitue une image complète de référence en effectuant un filtrage de convolution sur la fenêtre choisie dont on déplace le centre sur toute la surface de mesure.

Cette image complète de référence est gardée en mémoire pour servir à la comparaison avec l'image de mesure du même vitrage ou, ultérieurement, à la comparaison avec l'image de mesure d'un autre vitrage de la même série.

La description et les figures permettront de comprendre le fonctionnement de l'invention.

La **figure 1** représente l'installation de mesure d'un vitrage,

La **figure 2** montre un vitrage avec le contour de la surface de mesure,

La **figure 3** représente le maillage de la surface de l'image ombroscopique,

et la **figure 4,** le schéma optique du projecteur.

L'invention utilise comme on l'a vu, la technique ombroscopique habituelle qui consiste à éclairer un vitrage avec un projecteur et à en observer l'ombre sur un écran.

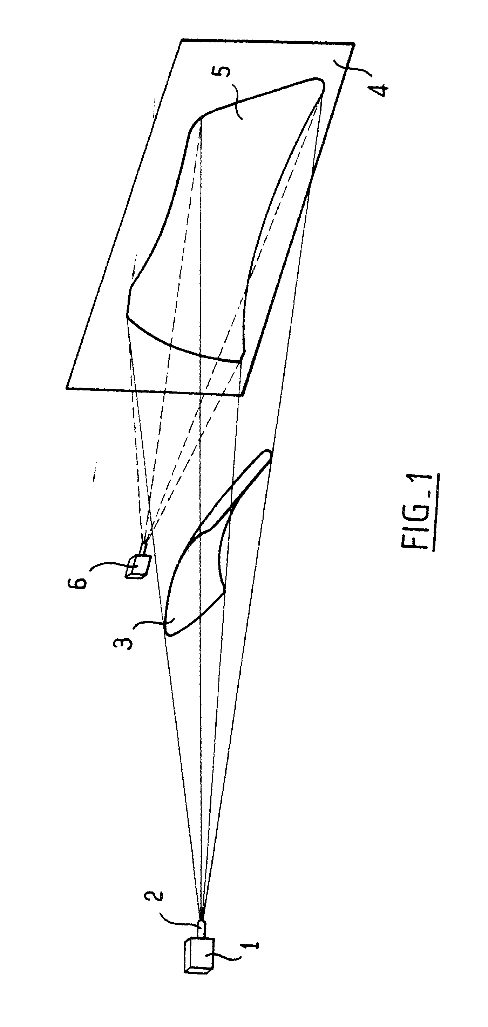

Sur la **figure 1**, on voit en 1 le projecteur qui, grâce à un diaphragme non représenté sur la figure, joue le rôle de source ponctuelle 2. La lumière issue de 2 éclaire le vitrage - sur la figure un pare-brise - 3 placé à une distance importante (par exemple 4 mètres) de la source lumineuse 2. Le vitrage 3 est placé dans les conditions où on veut détecter l'effet produit par le défaut de puissance optique. On sait en effet que pour une structure géométrique donnée du défaut du verre, l'action du défaut sur la vision, c'est-à-dire l'effet optique du défaut structurel du vitrage, dépend fortement des conditions d'observation telles que : distances relatives de l'observateur, du vitrage et de l'objet mais surtout, angle d'incidence.

Dans le cas des pare-brise, pour avoir une idée du confort visuel du conducteur, c'est dans les conditions réelles qu'il faut faire l'observation. C'est pourquoi, en général, dans le dispositif d'observation ombroscopique, le pare-brise est incliné comme sur la voiture et l'axe optique du projecteur est horizontal et parallèle à l'axe du véhicule.

En avant du pare-brise à une distance qui est par exemple de 4 mètres, se trouve un écran vertical 4 sur lequel est projetée l'image ombroscopique 5 du pare-brise 3.

Sur la **figure 1** toujours, on voit une caméra vidéo 6 qui permet d'observer toute l'ombre du pare-brise. Il s'agit d'une caméra matricielle CCD, par exemple, le modèle 4712 de la Société COHU Inc. (San Diego, CA, USA). Celle-ci qui peut travailler à des éclairements bas de 0,2 lux a 699 lignes horizontales pour 580 lignes verticales. Dans les conditions habituelles, une surface de 2 x 2 mm sur l'écran fournit un point de mesure.

L'emplacement de la caméra n'est pas déterminant en lui-même, il suffit qu'il permette d'obtenir une vision non déformée de tout le pare-brise. On placera par exemple avantageusement la caméra juste au-dessus du pare-brise, à la verticale de l'axe optique du projecteur comme on l'a représentée sur la figure 1.

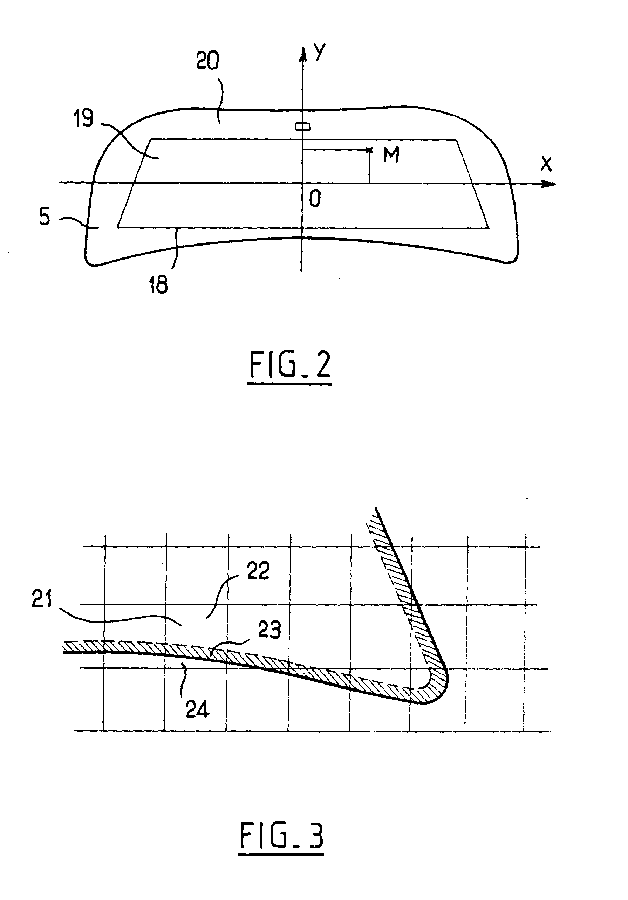

Sur la **figure 2** on a représenté l'ombre 5 du pare-brise 3 sur l'écran 4. On voit en 18 un cadre qui délimite deux zones dans le pare-brise, une zone 19 de vision principale et une zone périphérique 20.

Selon les cas, cette séparation en zones résulte d'une norme (R 43 de la ECE par exemple) ou des prescriptions du constructeur. Toujours est-il que les limites des valeurs des défauts optiques à respecter dans chaque zone ne sont pas les mêmes.

Les limites de la zone centrale de mesure sont soit un masque matériel comme sur la fissure, soit un masque numérique dont les coordonnées sont fixées dans la mémoire de l'ordinateur associé au dispositif de mesure, soit la limite constituée par le bord d'une zone émaillée opaque.

Le processus de mesure est le suivant :

Au moment où le vitrage arrive dans le champ du projecteur, la caméra CCD prend une image de l'ombre du vitrage. Celle-ci est mise en mémoire à deux fins, d'une part elle servira en finale à la comparaison avec l'image de référence et d'autre part elle va servir à élaborer celle-ci.

La comparaison entre l'image enregistrée et l'image de référence se fera point à point en calculant le rapport des éclairements, on en extraira une carte des défauts et il suffira de comparer l'éclairement de chaque zone de défaut à un niveau de référence pour mesurer le défaut en puissance positive (lentille convergente, zone claire) ou puissance négative (lentille divergente, zone sombre) par les mêmes méthodes que celles du document EP-A-0 463 940.

L'élaboration de l'image de référence ne présente pas de difficultés dans la partie centrale du vitrage, là il existe une continuité des domaines à mesurer. Il en va différemment là où s'arrête la zone de mesure, à la périphérie du vitrage ou là où existent des ombres sur l'image projetée, par exemple, sur un pare-brise, là où un rectangle d'émail cache le pied du rétroviseur collé. Dans ces zones, il est impossible de faire un balayage de l'image en y déplaçant une fenêtre dont le point à mesurer constitue le centre et dont l'éclairement (pondéré, moyen, etc...) constitue la référence. Lorsque la fenêtre de balayage de forme quelconque, rectangulaire ou circulaire par exemple, touche et surtout déborde la limite d'une zone soit impossible (noire) soit interdite (zone à ne pas mesurer ou bien là où la limite pour la valeur optique est différente), il faudrait empêcher la fraction exclue de la fenêtre de jouer un rôle dans le calcul de l'éclairement de référence. Mais alors, l'éclairement de référence ne serait que peu représentatif et la mesure risquerait d'être approximative aux frontières des zones de mesure.

La méthode de l'invention a le principe suivant : on reconstruit une image de référence continue et qui n'a plus de frontières.

Pour le faire, on remplace les zones sombres par des zones où l'éclairement est celui qui - logiquement - devrait y régner si la table sombre n'existait pas et, de même, aux limites extérieures de la zone de mesure, on rétablit artificiellement un éclairement en continuité avec ce qu'il est aux abords de ces limites extérieures. C'est-à-dire que dans les deux cas, on interpole ou en extrapole les éclairements connus.

La première étape consiste à établir les limites de la zone autorisée. La frontière peut être matérialisée sur le vitrage lui-même : bordure émaillée noire ou gabarit posé sur le vitrage pour séparer deux zones où les limites à respecter sont différentes (zones de vision principale et secondaire) mais le plus souvent, c'est l'informatique qui « connaît » la frontière, en référence à la forme extérieure de l'ombre sur l'écran. Pour les bords émaillés ou les taches sombres, on détecte les variations brutales d'éclairement.

La deuxième étape est un maillage des zones concernées (figure 3). Les mailles sont par exemple des carrés de 10 x 10 cm sur l'écran. Toutes les mailles limites sont identifiées comme la maille 21 figure 3.

Sur la figure, on voit trois zones : une zone à mesurer 22, une bande noire 23 et une zone extérieure 24.

Dans toute la maille 21, on va reconstituer un éclairement moyen. Il est constitué de l'éclairement mesuré dans la partie 22 pondéré par sa surface relativement à l'ensemble de la maille et d'un éclairement unique reconstitué pour l'ensemble des zones 23 et 24, lui aussi pondéré par la surface relative de l'ensemble des deux zones. Cet éclairement à affecter aux zones 23 et 24 est l'extrapolation par régression linéaire bidimensionnelle des éclairements des carrés voisins.

Une représentation géométrique simple de l'opération précédente consiste à imaginer un système d'axes habituel ox, oy et oz, les deux premiers étant orthogonaux et horizontaux, le troisième vertical. Sur le plan xOy, on trace un réseau de carrés, ce sont les mailles du maillage précédent. Au centre de chaque maille, une droite verticale s'élève jusqu'à une hauteur proportionnelle à l'éclairement moyen de la maille. La régression linéaire bidimensionnelle consiste à faire passer entre tous ces points, un plan moyen. Il va rencontrer la droite verticale placée au centre de la maille à déterminer à une hauteur qui fournit la valeur de l'éclairement moyen cherché.

L'opération précédente permet donc de disposer d'un maillage de l'image ombroscopique qui s'étend sur au moins une maille à l'extérieur du pourtour du vitrage.

L'étape suivante consiste à « lisser » la représentation précédente. On déplace maintenant une fenêtre de convolution sur toute la surface. Celle-ci peut avoir la même forme que les mailles précédentes ou une forme quelconque mais elle est de surface au maximum égale à celle des mailles. Au centre de la fenêtre, est le point où l'on veut connaître l'éclairement de référence définitif, il est calculé par un filtre de convolution à deux dimensions. Ce peut être une fonction de Gauss ou plus simplement une moyenne arithmétique pondérée des éclairements effectivement mesurés ou évalués.

C'est cette troisième image reconstituée qui sera comparée à la première enregistrée. La comparaison consiste en une division point par point des éclairements :

$$\frac{Eo\,(x,\ y)}{E\,(x,\ y)}$$

Pour être effectuée rapidement, elle utilise des « look up tables » (L.U.T.) qui permettent - en temps réel - de calculer les logarithmes, de les soustraire et de calculer l'exponentielle.

Pour effectuer une mesure de qualité, il est nécessaire de travailler dans des domaines restreints d'éclairement, là où les systèmes de mesure sont linéaires. Deux accessoires sont prévus pour atteindre ce résultat : un projecteur spécial et un diaphragme à variation continue devant la caméra CCD.

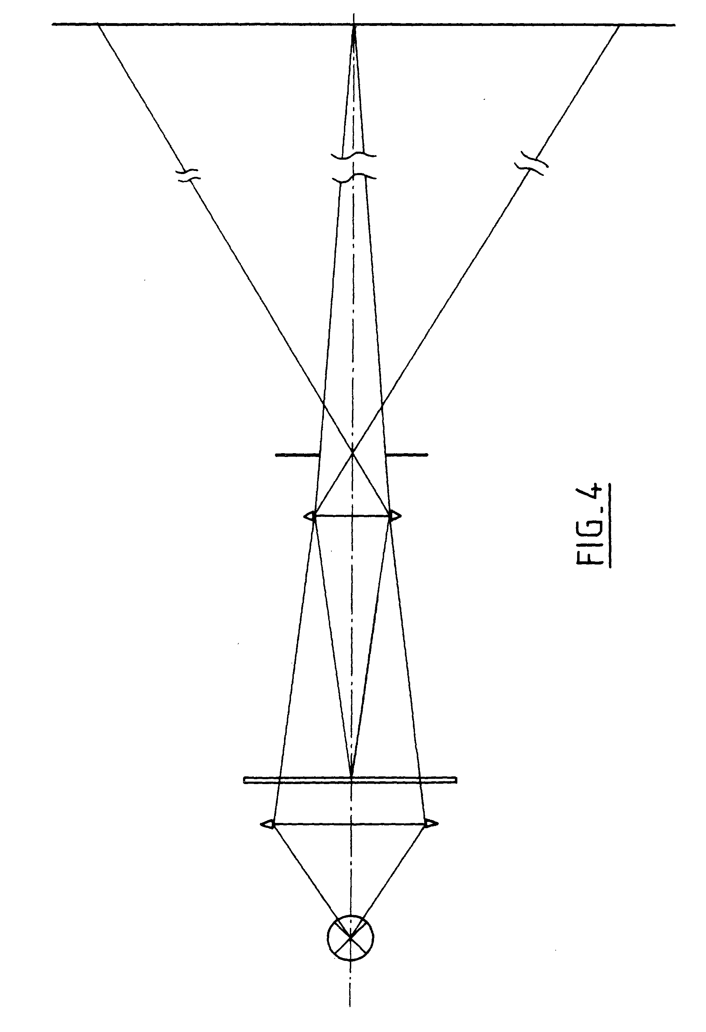

Le projecteur est représenté figure 4. Sa caractéristique essentielle est d'avoir un objectif fait d'un seul élément optique (un doublet de focale 100 mm) ce qui permet, en utilisant un condenseur MELLES GRIOT de 75 mm de distance focale d'obtenir l'image du filament de la lampe iode-quartz de 250 watt, précisément au niveau du diaphragme. Cette image joue le rôle d'une source ponctuelle d'éclairement ce qui fournit un éclairage très homogène qu'on ne peut obtenir avec un projecteur traditionnel. Ainsi, sur une même image ombroscopique, la caméra travaille sur une gamme d'éclairements réduite.

Pour compenser les variations de luminosité dues au vitrage lui-même (verre teinté, inclinaison) on a équipé la caméra CCD d'un diaphragme à iris qui ajuste pour chaque nouvelle mesure, le niveau d'éclairement <u>dans la caméra</u> à la même valeur.

## Revendications

**1.** Procédé de mesure de la qualité optique d'un vitrage comprenant les étapes suivantes :

- l'éclairage du vitrage avec une source de lumière localisée pour produire une image ombroscopique ;
- l'enregistrement de l'image ombroscopique par une caméra ;
- la réalisation de mesures ponctuelles de l'image enregistrée ;
- la comparaison entre la mesure de l'image enregistrée et l'éclairement d'une image de référence, élaborée à partir de l'image enregistrée, **caractérisé en ce que** pour chaque point de mesure du vitrage on détermine un éclairement de référence obtenu par le calcul de la moyenne pondérée des mesures ponctuelles effectuées ou estimées sur tous les points de mesure d'une fenêtre dont ledit point de mesure du vitrage est le centre, ladite fenêtre étant sucessivement déplacée sur toute la surface du vitrage de manière à déterminer l'éclairement de référence des autres points de mesure du vitrage. .

**2.** Procédé selon la revendication 1, **caractérisé en ce que** quand la fenêtre de convolution de l'image comporte des domaines où la mesure directe de l'éclairement est impossible ou interdite on substitue aux valeurs mesurées dans ces domaines des valeurs estimées extrapolées à partir de celles mesurées dans les surfaces voisines des domaines exclus de la mesure.

**3.** Procédé selon la revendication 2, **caractérisé en ce que** l'estimation des éclairements dans les domaines exclus se fait par les étapes suivantes :

- maillage de la surface de mesure du vitrage,
- identification des mailles limites des domaines exclus,
- calcul de l'éclairement moyen de la partie autorisée de la maille limite et du pourcentage de la surface de cette partie de la maille,
- calcul de l'éclairement moyen de la maille limite par extrapolation à partir des mailles voisines et de la partie autorisée de ladite maille limite, chacune pondérée en fonction de sa surface non exclue de la mesure.

**4.** Procédé selon la revendication 3, **caractérisé en ce qu'**on reconstitue une image complète de référence en effectuant un filtrage de convolution sur la fenêtre choisie dont on déplace le centre sur toute la surface de mesure.

**5.** Procédé selon la revendication 4, **caractérisé en ce que** l'image complète de référence est gardée en mémoire pour servir à la comparaison avec l'image de mesure du même vitrage ou, ultérieurement, à la comparaison avec l'image de mesure d'un autre vitrage de la même série.

**Claims**

**1.** Process for measuring the optical quality of a glazing comprising the following stages:

- the illumination of the glazing with a light source positioned so as to produce an ombroscopic image,
- the recording of the ombroscopic image by a camera,
- the implementation of punctiform measurements of the recorded image,
- the comparison between the measurement of the recorded image and the illumination of a reference image produced from the recorded image, **characterized in that** for each measurement point of the glazing a reference illumination obtained is determined by calculating the weighted average of the punctiform measurements performed or estimated on all the measurement points of a window, whose measurement point of the glazing is the centre, said window being successively displaced over the entire surface of the glazing, so as to determine the reference illumination of the other measurement points of the glazing.

**2.** Process according to claim 1, **characterized in that** when the convolution window of the image has areas where the direct measurement of the illumination is possible or prohibited, the measured values in these areas are substituted by estimated values extrapolated from those measured in neighbouring surfaces of areas excluded from the measurement.

**3.** Process according to claim 2, **characterized in that** the estimation of the illuminations in the excluded areas takes place on the basis of the following stages:

- mesh formation on the measurement surface of the glazing,
- identification of the limit meshes of the excluded areas,
- calculation of the average illumination of the authorized part of the limit mesh and the percentage of the surface of said part of the mesh,
- calculation of the average illumination of the limit mesh by extrapolation on the basis of neighbouring meshes and the authorized part of said limit mesh, each weighted as a function of the surface thereof not excluded from the measurement.

**4.** Process according to claim 3, **characterized in that** a complete reference image is reconstituted by carrying out a convolution filtering on the chosen window, whereof its centre is displaced over the entire measurement surface.

**5.** Process according to claim 4, **characterized in that** the complete reference image is stored in the memory to be used for comparison with the measurement image of the same glazing or, subsequently for comparison with the measurement image of another glazing of the same series.

**Patentansprüche**

**1.** Verfahren zum Messen der optischen Güte einer Glasscheibe, das die Stufen:

- Beleuchten der Glasscheibe mit einer lokalisierten Lichtquelle, um ein Schattenbild zu erzeugen,

- Aufzeichnen des Schattenbildes durch eine Kamera,

- Durchführen von Punktmessungen am aufgezeichneten Bild und

- Vergleichen des Messwerts des aufgezeichneten Bildes mit der Beleuchtungsstärke eines Bezugsbildes, das aus dem aufgezeichneten Bild hergestellt worden ist,

umfasst, **dadurch gekennzeichnet, dass** für jeden Messpunkt der Glasscheibe eine Bezugslichtstärke ermittelt wird, die durch Berechnung des gewogenen Mittels der Punktmessungen erhalten wird, die an allen Messpunkten eines Ausschnitts, wovon der Messpunkt der Glasscheibe die Mitte ist, durchgeführt oder abgeschätzt worden sind, und der Ausschnitt sukzessive über die gesamte Fläche der Glasscheibe derart bewegt wird, dass die Bezugslichtstärke der anderen Messpunkte der Glasscheibe ermittelt wird.

2. Verfahren nach Anspruch 1, **dadurch gekennzeichnet, dass,** wenn der Abtastausschnitt des Bildes Bereiche enthält, in denen die direkte Messung der Beleuchtungsstärke unmöglich oder verboten ist, die Messwerte in diesen Bereichen durch abgeschätzte Werte ersetzt werden, die aus denjenigen extrapoliert werden, die in den Flächen gemessen worden sind, die den von der Messung ausgeschlossenen Bereichen benachbart sind.

3. Verfahren nach Anspruch 2, **dadurch gekennzeichnet, dass** die Abschätzung der Beleuchtungsstärken in den ausgeschlossenen Bereichen durch die Stufen:

- Aufteilen der Messfläche der Glasscheibe in Raster,

- Auffinden der Rasterflächen, die an die ausgeschlossenen Bereiche angrenzen,

- Berechnen der mittleren Beleuchtungsstärke des erlaubten Teils der Grenzrasterfläche und des Prozentanteils der Fläche dieses Teils an der Rasterfläche und

- Berechnen der mittleren Beleuchtungsstärke der Grenzrasterfläche durch Extrapolation aus den benachbarten Rasterflächen und dem erlaubten Teil der Grenzrasterfläche, die jeweils in Abhängigkeit von ihrer nicht von der Messung ausgeschlossenen Fläche gewichtet werden,

erfolgt.

4. Verfahren nach Anspruch 3, **dadurch gekennzeichnet, dass** ein vollständiges Bezugsbild rekonstruiert wird, indem über den gewählten Ausschnitt, dessen Zentrum über die gesamte Messfläche bewegt wird, ein abtastendes Filtern durchgeführt wird.

5. Verfahren nach Anspruch 4, **dadurch gekennzeichnet, dass** das vollständige Bezugsbild gespeichert wird, um für den Vergleich mit dem Messbild derselben Glasscheibe oder später für den Vergleich mit dem Messbild einer anderen Glasscheibe derselben Serie zu dienen.

FIG_1

EP 0 685 733 B1

FIG.2

FIG.3

FIG_4